# FASCICULE DE BREVET EUROPEEN

(11) **EP 0 881 790 B1**
(45) Date de publication et mention de la délivrance du brevet: **19.09.2001**
(21) Numéro de dépôt: 98401252.6
(22) Date de dépôt: 27.05.1998
(51) Int. Cl.: H04B 10/17, H04J 14/02

(54) **Système de transmission optique à compensation dynamique de la puissance transmise**
Optisches Übertragungssystem mit dynamischer Kompensation der übertragenen Leistung
Optical transmission system with dynamic compensation of the transmitted power

(30) Priorité: 29.05.1997 FR 9706592
(43) Date de publication de la demande: 02.12.1998
(73) Titulaire: ALCATEL, 75088 Paris (FR)
(72) Inventeur: Jourdan, Amaury, 92310 Sevres (FR); Sotom, Michel, 75015 Paris (FR); Bruyere, Franck, 75014 Paris (FR); Soulage, Guy, 94400 Vitry sur Seine (FR)
(74) Mandataire: Smith, Bradford Lee

(56) Documents cités:
- EP-A- 0 639 876
- SCHNABEL R ET AL: "WAVELENGTH CONVERSION AND SWITCHING OF HIGH SPEED DATA SIGNALS USING SEMICONDUCTOR LASER AMPLIFIERS" ELECTRONICS LETTERS, vol. 29, no. 23, 11 novembre 1993, page 2047/2048 XP000422190

## Description

L'invention concerne un système de transmission optique à compensation dynamique de la puissance transmise et notamment un système de transmission par multiplexage en longueur d'onde (Wavelength Division Multiplexing).

Les lignes de transmissions optiques transportent aujourd'hui des signaux multiplexés en longueur d'onde. Ces signaux sont amplifiés tout le long de la transmission par des amplificateurs à fibres optiques.

La démarche actuelle consiste de plus en plus à envisager des solutions optiques pour faire l'ensemble de la transmission sur des réseaux de transmission.

Dans un réseau de transmission on a, outre les fonctions de transmission, des fonctions de routage, de configuration ou de reconfiguration pour acheminer l'information à un point donné de sortie du réseau.

Or lorsqu'on effectue des transmissions sur un réseau on est amené pour des raisons d'encombrement du trafic ou autre, à réaliser des reconfigurations à des endroits appropriés du réseau qui conduisent à changer le nombre de canaux de transmission qui se propagent sur les lignes de transmission optique et qui sont amplifiés par les amplificateurs à fibres optiques tout le long de ces lignes.

Les amplificateurs à fibres optiques et plus particulièrement les amplificateurs à fibres dopées à l'erbium sont utilisés sur les lignes de transmission optique car ils ne présentent pas de non-linéarité de gain en fonction de la puissance du signal d'entrée pour les fréquences de modulation des signaux utilisés dans les systèmes de télécommunication.

En effet le temps de récupération du gain dans un amplificateur à fibre dopée à l'erbium est supérieur à 0,1ms. Ce temps de récupération élevé procure une stabilisation du gain parce que celui-ci n'a pas le temps de remonter lorsque le signal passe d'un état haut à un état bas pour les fréquences de modulations utilisées dans le domaine des télécommunications qui sont de l'ordre de 100 MHz à 10 GHz.

Or il a été constaté que lorsque l'on change le nombre de canaux de transmission présents à l'entrée d'un amplificateur à fibre optique cela provoque une saturation ou une désaturation de cet amplificateur qui amène un phénomène transitoire. En effet, le gain de l'amplificateur varie de manière transitoire et la puissance totale du signal de sortie chute.

Ce phénomène est gênant car cela signifie que pendant un temps très court typiquement quelques dizaines de microsecondes, la puissance des canaux effectivement utilisés est modifiée ce qui malheureusement, peut conduire à des erreurs de transmission.

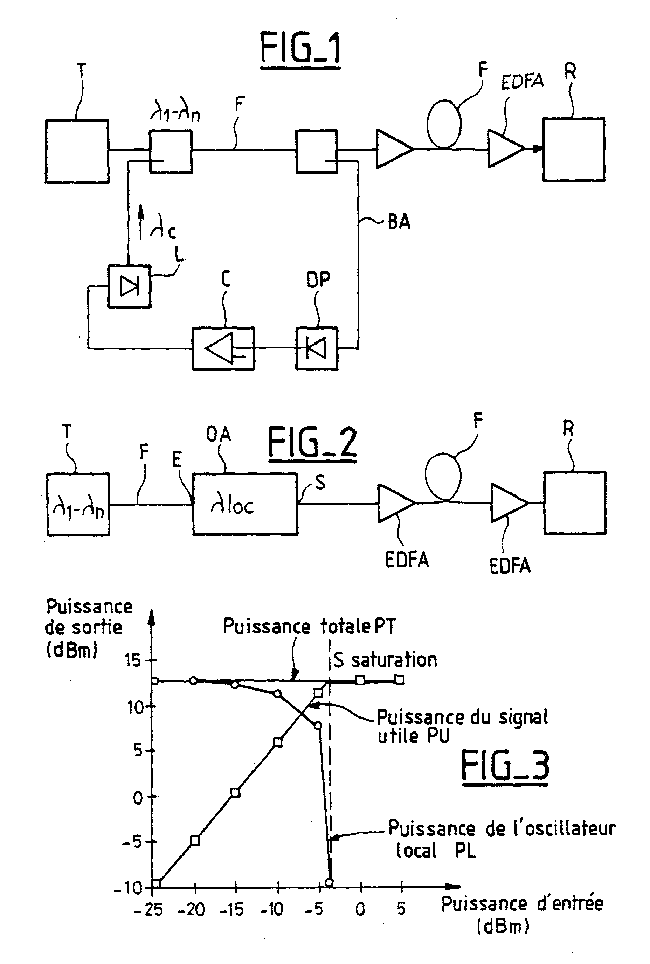

Pour résoudre ce problème, l'état de la technique antérieure propose un système dont le schéma de principe est représenté sur la figure 1.

Le terminal T représente un émetteur ou un noeud de routage du réseau et le terminal R représente un récepteur ou un autre noeud de routage du réseau. Des amplificateurs à fibres EDFA sont présents dans des répéteurs placés sur tout le long de la ligne entre les points d'accès ou de sortie T et R.

Ce système fait intervenir une source laser L(λc) placée en entrée de la ligne F et dont la puissance de sortie est asservie par l'intermédiaire de son courant de façon à ce que la puissance totale du signal utile et la puissance du signal émis par ce laser reste constante. Pour cela on récupère dans une boucle d'asservissement BA une faible partie de la puissance totale des signaux pour détecter au moyen du détecteur DP le niveau de puissance totale transmise sur la ligne et rétroagir sur le courant du laser L.

Le laser L est choisi de manière à avoir une longueur d'onde λc différente de celle des canaux utiles λ1-λn.

Ainsi, si par exemple l'on dispose de cinq canaux et que pour des raisons de routage trois de ces canaux sont supprimés, la boucle de régulation du laser va provoquer une augmentation de la puissance de sortie de ce dernier de manière à ce que la puissance des deux canaux restants et celle du laser corresponde à celle des cinq canaux initiaux.

Cette solution a pour inconvénient d'introduire un composant supplémentaire qui est une diode laser et une boucle électronique rapide de rétroaction comprenant un circuit de commande du laser. Cette solution est relativement complexe et onéreuse.

La présente invention permet de remédier à ces inconvénients et propose un système fiable et peu complexe.

De l'article intitulé " Wavelength conversion and switching of high speed data signals using semiconductor laser amplifiers", R. Schnabel et al, publié dans Electronics Letters, Vol 29, No 23, 11 novembre 1993, Stevenage, GB, il est par ailleurs connu en soi de coupler un amplificateur optique semi-conducteur en amont d'un amplificateur à fibre optique. Toutefois, cet article ne décrit pas un système de transmission mais un montage expérimental pour étudier les performances des amplificateurs optiques semi-conducteurs utilisés en tant que convertisseurs de longueur d'onde.

La présente invention a pour objet un système de transmission optique comprenant une ligne de transmission comportant au moins un amplificateur à fibre optique, un autre amplificateur optique étant couplé à l'entrée de ladite ligne, caractérisé en ce que ledit autre amplificateur est un amplificateur optique à gain stabilisé comprenant un oscillateur local apte à émettre une onde auxiliaire de compensation dont la longueur d'onde λloc est dans la bande de gain de chaque amplificateur à fibre optique de la ligne.

Selon une autre caractéristique de l'invention l'amplificateur à gain stabilisé est un amplificateur optique à semi-conducteur comprenant un guide optique couplé à l'oscillateur local, ledit oscillateur comportant au moins un réseau distribué, dont la longueur d'onde de Bragg est égale à la longueur d'onde λloc choisie pour l'oscillation.

Selon une autre caractéristique, l'amplificateur à gain stabilisé est un amplificateur à fibre optique dopé par une terre rare, un courant de pompe étant injecté dans la fibre pour obtenir un milieu d'amplification, ledit amplificateur comprenant autour de ce milieu une cavité laser de longueur d'onde λloc choisie pour l'oscillation.

Dans une première variante, la cavité laser est obtenue par deux réseaux de Bragg placés autour du milieu amplificateur.

Dans une deuxième variante, la cavité est réalisée par une boucle optique couplée à l'amplificateur à fibre, comprenant un filtre centré à la longueur d'onde choisie pour l'oscillation λloc suivi d'un atténuateur.

Selon une autre caractéristique, l'invention s'applique au transport d'informations de service. A cette fin, le système comporte des moyens de modulation pour moduler le courant de pompe injecté dans l'amplificateur à gain stabilisé à partir des informations de service à transmettre et des moyens de détection et de traitement du signal à la longueur d'onde locale λloc modulé.

Selon une autre caractéristique de ce système de transmission optique, la ligne de transmission comporte une pluralité d'amplificateurs optiques à gain stabilisé, et on prévoit des moyens de modulation pour moduler le courant de pompe injecté dans chaque amplificateur à gain stabilisé et des moyens de détection du signal à la longueur d'onde locale λloc et de traitement de ce signal.

La présente invention sera mieux comprise à la lecture de la description qui est faite et qui est donnée à titre illustratif et non limitatif et en regard des dessins sur lesquels :
- la figure 1 représente le schéma de principe d'un système de transmission selon l'art antérieur,
- la figure 2 représente le schéma de principe d'un système de transmission selon l'invention,
- la figure 3, illustre les évolutions de puissance en entrée et en sortie du système,
- la figure 4, représente un schéma d'un premier mode de réalisation de l'invention,
- la figure 5, représente un schéma d'un deuxième mode de réalisation de l'invention,
- la figure 6, représente le schéma d'une variante selon la figure 5,
- la figure 7, représente le schéma d'une autre variante selon l'invention,
- la figure 8, représente le schéma d'un système de transmission selon une application particulière de l'invention.

Dans toute la description les mêmes éléments portent les mêmes références.

Un système de transmission selon l'invention est illustré par le schéma de la figure 2.

Ce système comporte un amplificateur optique à gain stabilisé OA placé après l'émetteur T (ou après chaque noeud de routage si T est un noeud de routage). Cet amplificateur pourra avantageusement remplacer l'amplificateur à fibre optique placé habituellement à cet endroit.

Cet amplificateur optique à gain stabilisé OA est choisi de manière à générer une oscillation locale λloc de longueur d'onde différente de l'une des longueurs d'ondes des canaux de transmission de λ1-λn.

La puissance totale de sortie de l'amplificateur à gain stabilisé correspond à la puissance des signaux des canaux appliqués en entrée à laquelle s'ajoute la puissance du signal de l'onde générée par la cavité laser de l'amplificateur OA.

On rappelle qu'un amplificateur optique à gain stabilisé est un amplificateur dans lequel on crée une rétroaction de façon à ce qu'une cavité laser se mette en place autour du milieu amplificateur, pour qu'une oscillation se produise à l'intérieur de cette cavité. Lorsqu'une oscillation se produit à l'intérieur de la cavité on est en présence d'un fonctionnement en oscillateur laser. Le fonctionnement d'un oscillateur laser est tel que tant que l'on se trouve au dessus du seuil de ce laser le gain de la cavité reste constant.

Le schéma de la figure 3 permet d'illustrer le phénomène de compensation produit par l'amplificateur OA sur la puissance totale de sortie.

Cette figure illustre l'évolution en fonction de la puissance d'entrée de la puissance de sortie du signal utile PV et de la puissance de sortie totale PT.

L'amplificateur étant un amplificateur à gain stabilisé son gain est constant. La puissance du signal utile PV varie de façon linéaire en fonction du gain par conséquent, à une augmentation de la puissance d'entrée correspond une augmentation de la puissance de sortie jusqu'au moment ou le seuil du laser est dépassé. Lorsque le seuil est dépassé, le laser s'éteint, il n'y a plus de stabilisation du gain, l'amplificateur sature (point S sur la courbe).

On peut voir également sur cette courbe que la puissance PL de l'oscillateur local suit une courbe inverse. Lorsque l'on s'approche du seuil, la puissance de l'oscillateur local chute jusqu'à zéro.

La somme des deux courbes de puissance correspond à la courbe de la puissance totale PT de sortie de l'amplificateur. Cette puissance PT est constante comme on peut le voir sur cette figure.

Le régime d'utilisation de ce composant est choisi en dessous du seuil de la cavité laser de façon à pouvoir avoir une stabilisation du gain en restant toutefois proche de la zone de saturation.

Ainsi le gain étant stabilisé, les variations de puissance du signal d'entrée n'ont pas d'influence sur le gain appliqué à ce signal et la puissance de sortie est constante (signal utile et oscillation locale).

La longueur d'onde λloc de la cavité laser doit être dans la bande de gain des amplificateurs de la ligne de transmission.

En effet, pour que la puissance totale se propage dans toute la ligne d'amplification et que cette puissance reste constante à travers l'ensemble de la ligne il faut que le signal utile se propage en même temps que l'oscillation à travers toute la chaîne d'amplification.

D'autre part il faut que cette longueur d'onde soit distincte des longueurs d'ondes des canaux de transmission utilisés pour les signaux. Cela peut être obtenu en choisissant une longueur d'onde située en bord de bande (soit par exemple 1528 nm pour une bande qui est typiquement de 1530-1560 nm ou éventuellement de 1530-1562 nm).

Une autre solution consiste à choisir une longueur d'onde située au milieu de la bande dans la mesure ou cette bande présente un "trou" de plusieurs nm, une ou plusieurs longueur d'ondes n'étant pas prévues dans le peigne d'émission.

La longueur d'onde λloc est définie soit par construction lors de la réalisation de l'amplificateur soit par réglage, selon la nature de l'amplificateur utilisé.

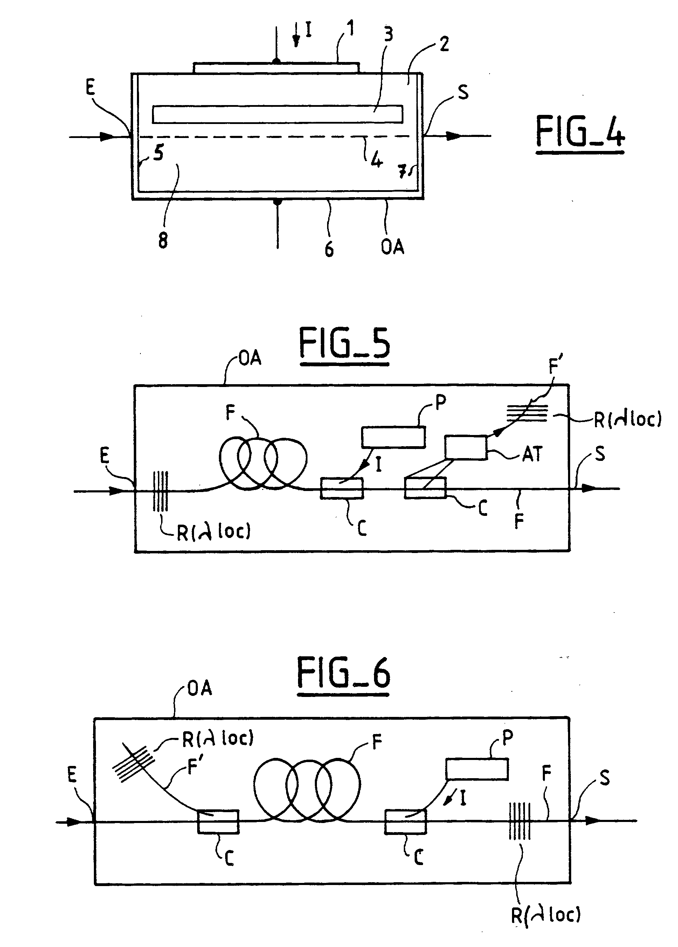

L'amplificateur à gain stabilisé OA peut être réalisé selon un premier mode de réalisation au moyen d'un amplificateur à semi-conducteur et selon un deuxième mode au moyen d'un amplificateur à fibre optique. Ces deux modes de réalisation sont illustrés par les schémas représentés sur les figures 4 à 7 détaillées dans la suite de la description.

Outre le réglage de la longueur d'onde choisie pour l'oscillateur local on opère également à un réglage de la puissance de cet oscillateur local pour ne pas que cette puissance soit trop élevée par rapport à celle du signal. A cette fin il est proposé d'effectuer un réglage "grossier" puis un réglage "fin" de la puissance.

Le premier réglage "grossier" est opéré en plaçant un élément atténuateur fixe sur la longueur d'onde λloc. On utilisera par exemple un démultiplexeur ou un filtre sur la longueur d'onde λloc pour n'atténuer que le signal à cette longueur d'onde dans le cas des amplificateurs à fibres optiques. Ce réglage est fait en choisissant un élément présentant plus de réflectivité d'un côté que de l'autre dans le cas d'amplificateur à semi-conducteur.

Le réglage fin s'effectue en revanche en agissant sur le courant de pompe de l'amplificateur à gain stabilisé ou sur la puissance de pompe suivant qu'il s'agit d'un amplificateur semi-conducteur ou d'un amplificateur à fibre.

Selon un exemple de réalisation, un amplificateur à semi-conducteur a été représenté sur la figure 4 et comporte :
- deux électrodes parallèles 1 et 6, permettant d'injecter un courant électrique de pompage I ,
- un substrat semi-conducteur 8 constitué d'un premier matériau semi-conducteur de type N, compris entre les électrodes 1 et 6,
- une couche de confinement 2, constituée du même premier matériau, mais avec un dopage P+ opposé à celui du substrat 8,
- un guide optique 3, actif sur toute sa longueur, et dont l'axe longitudinal est parallèle aux électrodes 1 et 6; constitué d'un second matériau semi-conducteur dont la maille est accordée avec celle du premier matériau et qui à un indice de réfraction plus grand que celui du premier matériau;
- un réseau distribué 4 s'étendant tout le long du guide 3, constitué d'une mince couche de matériau semi-conducteur d'indice plus élevé que celui du substrat 8 et gravé périodiquement dans une partie ou dans la totalité de l'épaisseur de cette couche;
- deux faces clivées 5 et 7, traitées antireflet, terminant le substrat 8, perpendiculairement à l'axe longitudinal du guide 3.

Le pas du réseau 4 est choisi de telle façon que la longueur d'onde de Bragg de ce réseau soit dans la plage spectrale d'amplification du matériau semi-conducteur du guide actif 3.

On trouvera une description plus détaillée d'un tel amplificateur dans la demande de brevet EP 0 639 876.

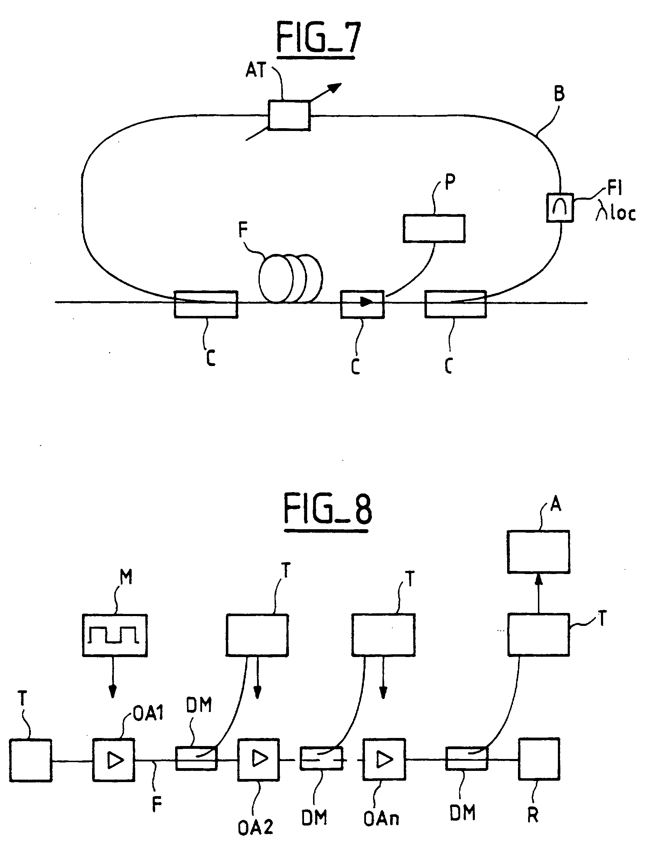

L'amplificateur à gain stabilisé peut être réalisé selon un deuxième mode de réalisation par un amplificateur à fibre optique dopé par une terre rare (de l'erbium), une onde de pompe étant injectée dans la fibre pour obtenir le milieu amplificateur et une cavité laser étant créée autour de ce milieu amplificateur, soit au moyen d'une boucle optique B (cf. figure 7), soit en rajoutant des réseaux de Bragg gravés par exemple sur la fibre (cf. figures 5 et 6).

Une variante du mode de réalisation de la figure 5 est représentée sur la figure 6.

La figure 5, illustre un amplificateur à fibre à gain stabilisé basé sur l'utilisation de réseaux de Bragg R gravés (par exemple) sur la fibre optique. Un premier réseau est placé en entrée E de l'amplificateur OA. Le deuxième réseau est placé sur une fibre F' couplée par un coupleur optique C à la fibre F. Un atténuateur AT est placé entre le coupleur et le réseau R pour régler le gain ce qui donne une flexibilité sur la dynamique du composant. Ces réseaux R sont choisis, par construction, pour avoir la longueur d'onde λloc.

La pompe P est couplée optiquement à la fibre par un coupleur optique C.

La figure 6, illustre une variante équivalente à la réalisation représentée sur la figure 5, selon laquelle un réseau R (λloc) est placé sur la fibre de transmission F en sortie S du milieu amplificateur OA. Le deuxième réseau R est placé sur la fibre F' qui est couplée à la fibre F en entrée E du milieu amplificateur.

La figure 7, illustre un amplificateur à fibre à gain stabilisé basé sur une boucle optique B couplée à la fibre F par des coupleurs C, comportant un filtre accordable FI à la longueur d'onde λloc suivi d'un atténuateur AT pour régler le niveau de puissance du signal à la longueur d'onde λloc, réinjecté.

Selon une application particulière de l'invention on applique une modulation au courant de pompe de l'amplificateur à gain stabilisé de manière à créer une modulation de l'onde de la longueur d'onde de l'oscillation locale.

Une telle modulation peut être utilisée pour transporter par exemple des informations de service d'un terminal émetteur T à un terminal récepteur R ou d'un noeud de transmission à un autre noeud.

Cette modulation ne procure aucune perturbation du signal utile car le gain de l'amplificateur est stabilisé et qu'il est par conséquent indépendant du courant de commande de l'amplificateur. Ainsi le fonctionnement normal de l'amplificateur est inchangé.

On place donc pour cela un modulateur M agissant sur le courant de pompe I de l'amplificateur OA1 placé à l'entrée de la ligne.

Un démultiplexeur DM à la longueur d'onde de service (de l'oscillateur local de l'amplificateur OA) est inséré avant l'amplificateur de ligne suivant. L'amplificateur de ligne suivant est un amplificateur optique placé en un point de sortie de la ligne : soit avant le terminal récepteur R, soit tout le long de la ligne avant chaque amplificateur de ligne OA2, etc..., comme cela est illustré par la figure 8.

Cependant pour cela, il conviendra de remplacer les amplificateurs à fibre de la ligne par des amplificateurs optiques à gain stabilisé.

Le démultiplexeur DM est suivi d'un dispositif effectuant la détection du signal λloc et le traitement du signal détecté pour:
- surveiller la qualité de la ligne entre deux amplificateurs;
- pour traiter les informations de service et ajouter de nouvelles informations sur la qualité de la ligne relatives à la liaison amont;
- pour moduler le courant de pompe de l'amplificateur suivant avec de nouvelles informations.

En sortie de ligne, le dispositif de détection et traitement T sera par exemple couplé à un dispositif d'analyse d'informations A transportés à cette longueur d'onde λloc. Les dispositifs de détection et traitement et d'analyse sont des dispositifs couramment utilisés pour de tels traitements.

## Revendications

1. Système de transmission optique comprenant une ligne de transmission (F) comportant au moins un amplificateur à fibre optique, un autre amplificateur optique étant couplé à l'entrée de ladite ligne, **caractérisé en ce que** ledit autre amplificateur est un amplificateur optique à gain stabilisé (OA) comprenant un oscillateur local apte à émettre une onde auxiliaire de compensation dont la longueur d'onde λloc est dans la bande de gain de chaque amplificateur à fibre optique de la ligne.

2. Système de transmission optique selon la revendication 1, **caractérisé en ce que** l'amplificateur optique à gain stabilisé (OA) est un amplificateur optique à semi-conducteur comprenant un guide optique (3) couplé à l'oscillateur local, ledit oscillateur comportant au moins un réseau distribué (R), ayant une longueur d'onde de Bragg égale à la longueur d'onde λloc choisie pour l'oscillation.

3. Système de transmission optique selon la revendication 1, **caractérisé en ce que** l'amplificateur à gain stabilisé (OA) est un amplificateur à fibre optique dopé par une terre rare, un courant de pompe (I) étant injecté dans la fibre (F') pour obtenir un milieu d'amplification, ledit amplificateur comprenant autour de ce milieu une cavité laser de longueur d'onde λloc choisie pour l'oscillation.

4. Système de transmission optique selon la revendication 3, **caractérisé en ce que** la cavité laser est obtenue par deux réseaux de Bragg placés autour du milieu amplificateur.

5. Système de transmission optique selon la revendications 3, **caractérisé en ce que** la cavité est réalisée par une boucle optique (BA) couplée à l'amplificateur à fibre, comprenant un filtre centré (FI) à la longueur d'onde choisie pour l'oscillation λloc suivi d'un atténuateur.

6. Système de transmission optique selon la revendication 2, **caractérisé en ce qu'**il comporte des moyens de modulation (M) pour moduler le courant de pompe injecté dans l'amplificateur à gain stabilisé placés à l'entrée de la ligne à partir d'informations de service à transmettre et des moyens de détection et de traitement (T) du signal à la longueur d'onde locale λloc modulé placés à des points de sortie de la ligne.

7. Système de transmission optique selon la revendication 6, **caractérisé en ce que** la ligne de transmission (F) comporte une pluralité d'amplificateurs optiques à gain stabilisé (OA), et en ce qu'il comporte des moyens de modulation (M) pour moduler le courant de pompe injecté dans chaque amplificateur à gain stabilisé et des moyens (T) de détection du signal à la longueur d'onde locale λloc et de traitement de ce signal.

## Patentansprüche

1. Optisches Übertragungssystem, das eine Übertragungsleitung (F) umfasst, die wenigstens einen Verstärker mit optischer Faser und einen weiteren optischen Verstärker umfasst, der an den Eingang der Leitung gekoppelt ist, **dadurch gekennzeichnet, dass** der weitere optische Verstärker ein optischer Verstärker (OA) mit stabilisierter Verstärkung ist, der einen Lokaloszillator umfasst, der fähig ist eine Ausgleichshilfswelle auszusenden, deren Wellenlänge λloc im Verstärkungsband jedes Verstärkers mit optischer Faser der Leitung liegt.

2. Optisches Übertragungssystem nach Anspruch 1, **dadurch gekennzeichnet, dass** der optische Verstärker (OA) mit stabilisierter Verstärkung ein optischer Halbleiterverstärker ist, der einen Lichtwellenleiter (3) umfasst, der an den Lokaloszillator gekoppelt ist, wobei der Oszillator wenigstens ein verteiltes Gitter (R) mit einer Bragg-Wellenlänge gleich der für die Oszillation gewählten Wellenlänge λloc aufweist.

3. Optisches Übertragungssystem nach Anspruch 1, **dadurch gekennzeichnet, dass** der Verstärker (OA) mit stabilisierter Verstärkung ein Verstärker mit mit einer Seltenen Erde dotierten optischen Faser ist, wobei der Faser (F') ein Pumpstrom (I) zugeführt wird, um ein Verstärkungsmedium zu erhalten, wobei der Verstärker um dieses Medium herum einen Laserhohlraum mit der für die Oszillation gewählten Wellenlänge λloc umfasst.

4. Optisches Übertragungssystem nach Anspruch 3, **dadurch gekennzeichnet, dass** der Laserhohlraum durch zwei Bragg-Gitter erhalten wird, die um das Verstärkungsmedium herum angeordnet sind.

5. Optisches Übertragungssystem nach Anspruch 3, **dadurch gekennzeichnet, dass** der Hohlraum an den Verstärker mit Faser gekoppelte optische Schleife (BA) ausgeführt ist, die ein auf die für die Oszillation gewählte Wellenlänge λloc zentriertes Filter (FI), gefolgt von einem Dämpfungsglied, umfasst.

6. Optisches Übertragungssystem nach Anspruch 2, **dadurch gekennzeichnet, dass** es am Eingang der Leitung angeordnete Modulationsmittel (M) zum Modulieren des dem Verstärker mit stabilisierten zugeführten Pumpstroms ausgehend von zu übertragenden Dienstinformationen und Mittel (T) zur Erfassung und Verarbeitung des Signals mit der modulierten lokalen Wellenlänge λloc aufweist, die an Ausgangspunkten der Leitung angeordnet sind.

7. Optisches Übertragungssystem nach Anspruch 6, **dadurch gekennzeichnet, dass** die Übertragungsleitung (F) eine Vielzahl von optischen Verstärkern (OA) mit stabilisierter Verstärkung aufweist und dass es Modulationsmittel (M) zum Modulieren des jedem Verstärker mit stabilisierter Verstärkung zugeführten Pumpstroms und Mittel (T) zur Erfassung des Signals mit der lokalen Wellenlänge λlock und zur Verarbeitung dieses Signals aufweist.

## Claims

1. An optical transmission system comprising a transmission line (F) having at least one optical fiber amplifier, another optical amplifier (OA) being coupled to the input of said line (F), the system being **characterized in that** said other amplifier is a stabilized gain optical amplifier (OA) including a local oscillator suitable for emitting an auxiliary compensation wave at a wavelength λloc that lies within the gain band of each optical fiber amplifier of the line.

2. An optical transmission system according to claim 1, **characterized in that** the stabilized gain optical amplifier (OA) is a semiconductor optical amplifier having a light guide (3) coupled to the local oscillator, said oscillator including at least one distributed grating (R) at a Bragg wavelength equal to the wavelength λloc selected for the oscillation.

3. An optical transmission system according to claim 1, **characterized in that** the stabilized gain amplifier (OA) is an optical fiber amplifier doped with a rare earth, pumping current (I) being injected into the fiber (F') to obtain an amplifying medium, said amplifier comprising, around said medium, a laser cavity of wavelength λloc selected for the oscillation.

4. An optical transmission system according to claim 3, **characterized in that** the laser cavity is obtained by two Bragg gratings placed on either side of the amplifying medium.

5. An optical transmission system according to claim 3, **characterized in that** the cavity is implemented by an optical loop (BA) coupled to the fiber amplifier, and comprising a filter (FI) centered on the wavelength selected for the oscillation λloc followed by an attenuator.

6. An optical transmission system according to claim 2, **characterized in that** it includes modulator means (M) for modulating the pumping current injected into the stabilized gain amplifier placed at the input of the line with service information to be transmitted, and means (T) for detecting and processing the signal at the modulated local wavelength λloc, which means are placed at output points from the line.

7. An optical transmission system according to claim 6, **characterized in that** the transmission line (F) includes a plurality of stabilized gain optical amplifiers (OA), and in that it includes modulator means (M) for modulating the pumping current injected into each stabilized gain amplifier, and means (T) for detecting the signal at the local wavelength λloc and for processing said signal.
